# FASCICULE DE BREVET EUROPEEN

(11) **EP 3 632 713 B1**
(45) Date de publication et mention de la délivrance du brevet: **12.05.2021**
(21) Numéro de dépôt: 19197933.5
(22) Date de dépôt: 18.09.2019
(51) Int. Cl.: B60C 23/00

(54) **VÉHICULE AUTOMOBILE COMPRENANT UN SYSTÈME DE TÉLÉGONFLAGE**
KRAFTFAHRZEUG MIT FERNFÜLLSYSTEM
AUTOMOBILE COMPRISING A SYSTEM FOR TYRE PRESSURE REGULATION

(30) Priorité: 02.10.2018 FR 1859103
(43) Date de publication de la demande: 08.04.2020
(73) Titulaire: Sodijantes Industrie, 14700 Falaise (FR)
(72) Inventeur: DESMYTTERE, Jan, 14700 FALAISE (FR)
(74) Mandataire: Lavoix

(56) Documents cités:
- DE-A1- 4 323 835
- DE-U1- 8 715 177

## Description

La présente invention concerne un véhicule automobile comprenant :
- au moins un essieu ;
- au moins une roue comprenant un disque droit fixé à l'essieu, une jante et un pneumatique disposé autour de la jante,
- un système de télégonflage, propre à faire varier une pression interne dans un volume interne du pneumatique, en fonction de conditions de roulement du véhicule, le système de télégonflage comprenant un compresseur de gaz porté par le véhicule.

La circulation d'un véhicule automobile, notamment d'un véhicule agricole tel qu'un tracteur, sur un sol meuble, comme par exemple un champ, avec une pression interne des pneumatiques des roues du véhicule trop élevée, entraîne des risques de patinage. Une des conséquences immédiates du patinage est une surconsommation de carburant due à une motricité moins efficace. En effet, le patinage est la première cause de surconsommation de carburant dans les activités agricoles, et le carburant, tel que du gasoil, est la plus importante source de coût pour un utilisateur de tracteur.

Le contrôle de la pression des pneumatiques lors du travail dans les champs permet également d'élargir la période de l'année dans laquelle les champs sont praticables, en améliorant la motricité, ce qui permet de commercer à travailler plus tôt et de finir plus tard dans la saison.

De plus, la circulation dans les champs avec une pression de pneumatiques suffisamment faible permet d'améliorer la préservation des sols par réduction du tassement et optimisation de l'empreinte du pneumatique, et ainsi d'augmenter les rendements agronomiques.

A l'inverse, la circulation sur route d'un véhicule automobile dont la pression interne des pneumatiques est insuffisante est source de risques, notamment à cause des difficultés à contrôler sa trajectoire. De plus, une telle circulation peut entraîner une usure prématurée voire une destruction des pneumatiques, dont le remplacement forme la deuxième plus importante source de coût pour un utilisateur de tracteur.

L'utilisation seule d'une pression intermédiaire entre les valeurs recommandées dans les champs et les valeurs recommandées sur route ne permet pas de résoudre ces problèmes de manière satisfaisante.

Une des solutions apportées à ces problèmes est l'utilisation d'un système de télégonflage, permettant de modifier la pression interne des pneumatiques du véhicule directement depuis la cabine de pilotage, généralement entre plusieurs valeurs préenregistrées correspondant à des conditions d'utilisation du véhicule.

Ainsi, le véhicule comprend par exemple un compresseur permettant de faire varier et d'ajuster la pression dans les pneumatiques en fonction des conditions de roulement, comme lors des transitions entre champs et routes et inversement.

Le document DE 8715177 U1 décrit un système de télégonflage disposant d'une vanne à deux voies et quatre positions.

Un autre système, entièrement positionné sur la roue, est connu du document DE 4323835 A1.

Ces dispositifs peuvent encore être améliorés. En effet, au vu de la grande contenance d'un pneumatique de véhicule agricole, faire varier la pression dans le pneumatique est une opération relativement longue, notamment pour des variations de l'ordre de 1 bar. Lorsque plusieurs transitions entre route et champs sont à prévoir dans la journée, cela représente une perte de temps notable pour l'utilisateur.

Un but de l'invention est donc de fournir un véhicule automobile dont la pression des pneumatiques peut être adaptée à la charge portée par les roues, ainsi qu'à à la vitesse et aux conditions de roulement.

A cet effet, l'invention a pour objet un véhicule automobile du type précité, dans lequel la roue comprend un réservoir, disposé entre le disque droit et la jante, le réservoir contenant un gaz pressurisé et étant fluidiquement connecté au compresseur à travers une vanne d'entrée,
le système de télégonflage comprenant en outre un capteur de pression propre à mesurer une pression dans le volume interne du pneumatique et une vanne quatre voies reliant fluidiquement deux éléments parmi :
- le réservoir,
- le volume interne du pneumatique, et
- l'extérieur du pneumatique.

Un tel véhicule permet de stocker de l'air en surpression dans le réservoir de la roue et ainsi d'augmenter très rapidement la pression dans les pneumatiques lorsqu'un ajustement est requis.

Selon des modes de réalisation particuliers, le véhicule selon l'invention présente l'une ou plusieurs des caractéristiques précédentes, prise(s) indépendamment ou selon toute combinaison techniquement réalisable :
- le véhicule est un véhicule agricole ;
- le réservoir présente une forme sensiblement annulaire et sensiblement symétrique par rapport à un plan médian de la roue ;
- le système de télégonflage est apte à faire varier la pression interne dans le volume interne du pneumatique pendant le roulement du véhicule ainsi qu'à l'arrêt ;
- la vanne d'entrée du réservoir est reliée au compresseur par l'intermédiaire d'un joint tournant monté sur le moyeu de la roue ;
- le système de télégonflage est apte à réguler une pression de gaz dans le réservoir autour d'une valeur de consigne prédéterminée du véhicule ainsi qu'à l'arrêt ;
- le système de télégonflage comprend un module de pilotage pneumatique, pilotant la vanne quatre voies par une pression de pilotage, le véhicule comprenant en outre un joint tournant disposé dans le moyeu de la roue et transmettant la pression de pilotage du module de gestion à la vanne quatre voies ; et
- le véhicule automobile comprend au moins un capteur de charge disposé sur le moyeu de la roue du véhicule, propre à mesurer une masse portée par la roue.

L'invention concerne également un procédé d'ajustement d'une pression dans un pneumatique d'au moins une roue d'un véhicule automobile tel que décrit plus haut, le procédé comprenant les étapes suivantes :
- mesure d'une première valeur de pression dans le pneumatique par le capteur de pression ;
- détermination d'une seconde valeur de pression, différente la première valeur, désirée dans le pneumatique, en fonction de conditions de roulement du véhicule ;
- mise en communication du volume interne du pneumatique avec le réservoir ou avec l'extérieur, par le biais de la vanne quatre voies, et ajustement de la pression dans le pneumatique ;
- roulement du véhicule avec une pression ajustée dans le pneumatique ; et
- simultanément au roulement du véhicule, remplissage du réservoir par le compresseur jusqu'à une pression de consigne du réservoir.

Selon un mode de réalisation particulier, le procédé selon l'invention présente la caractéristique suivante :
- la seconde valeur de pression est déterminée en fonction d'une masse portée par la roue, déterminée au moyen d'un capteur de charge positionné sur le moyeu de la roue.

L'invention sera mieux comprise à la lecture de la description qui suit, donnée uniquement à titre d'exemple, et faite en référence aux dessins annexés, parmi lesquels :
- la figure 1 est une vue de côté d'un véhicule automobile selon l'invention ;
- la figure 2 est une vue en coupe d'une roue du véhicule de la figure 1 ; et
- la figure 3 est une vue en coupe d'une roue de véhicule automobile selon un autre mode de réalisation de l'invention.

Dans tout ce qui suit, les valeurs de pressions sont données en bars relatifs, c'est-à-dire relativement à un zéro pris à la pression atmosphérique normale, soit environ 1013 hPa.

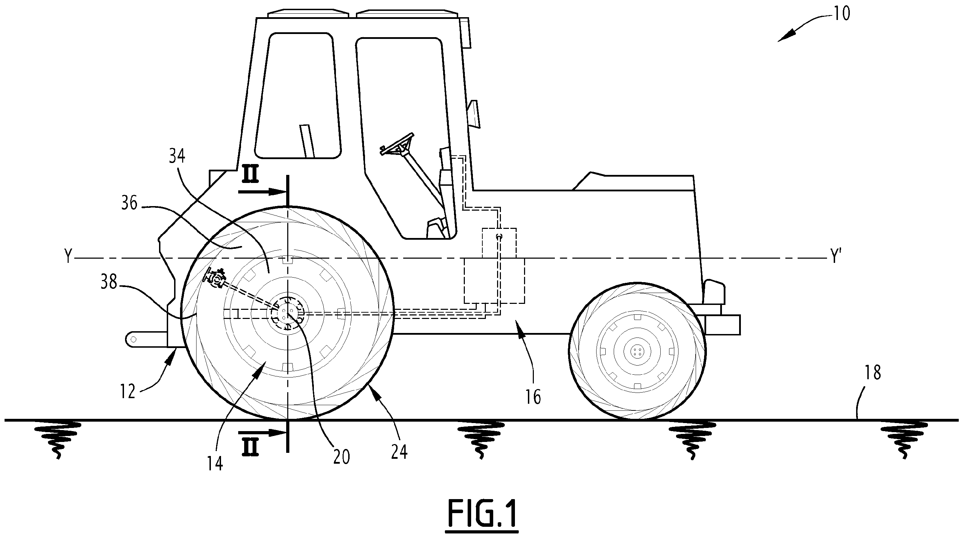

Un véhicule automobile 10 est représenté sur la figure 1, comportant un châssis 12, quatre roues 14, quatre pneumatiques 24 et un système de télégonflage 16.

Le véhicule 10 est destiné à circuler sur des sols 18 présentant des conditions de roulement différentes les unes des autres, notamment en terme d'adhérence des pneumatiques 24 au sol 18.

Le véhicule 10 est notamment un véhicule agricole, par exemple un tracteur ou une moissonneuse-batteuse, et est destiné à circuler à la fois dans un champ et sur une route.

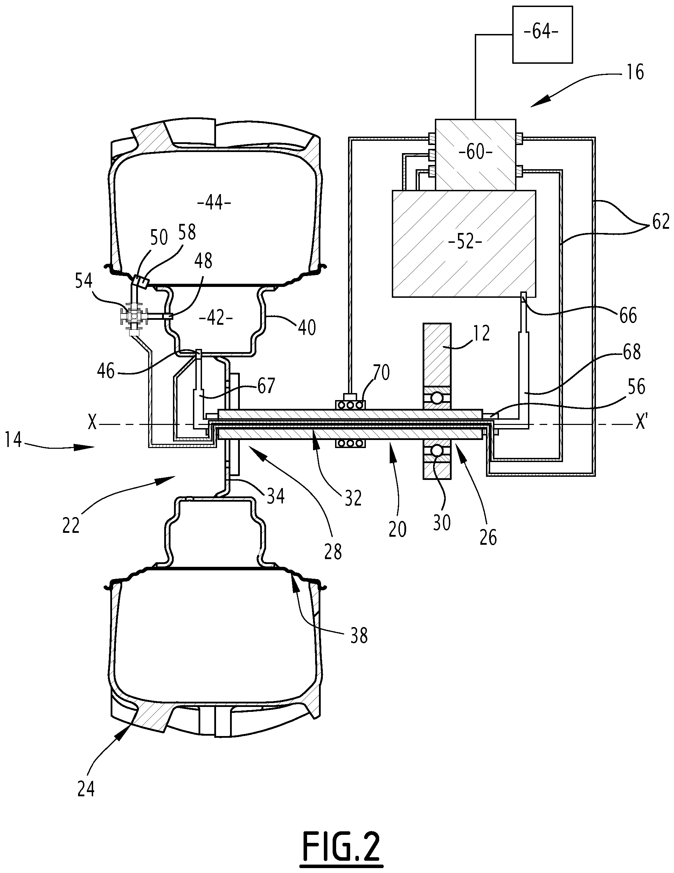

Dans un premier mode de réalisation, représenté en détail sur la figure 2, chaque roue 14, est fixée sur un essieu 20 respectif individuel, monté mobile en rotation sur le châssis 12.

L'essieu 20 est sensiblement cylindrique et s'étend selon un axe central X-X' orthogonal à une direction principale de déplacement Y-Y' du véhicule 10. L'axe central X-X' est également l'axe de rotation de l'essieu 20 par rapport au châssis 12.

L'essieu 20 présente une extrémité interne 26 orientée vers le châssis 12, et une extrémité externe 28. L'essieu 20 est monté sur le châssis 12 au niveau de son extrémité interne 26, notamment au moyen d'au moins un palier de roulement 30 autorisant la rotation de l'essieu 20 par rapport au châssis 12.

Comme représenté sur la figure 2, l'essieu 20 présente un conduit central 32 sensiblement cylindrique, s'étendant le long de l'axe central X-X' entre les deux extrémités 26, 28. Le conduit central 32 débouche axialement à l'extrémité interne 26 et à l'extrémité externe 28, et permet le passage d'air comprimé le long de l'essieu 20.

La roue 14 comprend, disposés successivement radialement depuis l'essieu 20, un disque droit 34, un réservoir 36 d'air comprimé et une jante 38 portant le pneumatique 24.

Le disque droit 34 est par exemple une plaque métallique circulaire et sensiblement plane, présentant un orifice central dans lequel est engagée l'extrémité externe 26 de l'essieu 20. L'essieu 20 est fixé au disque droit 34, par exemple au moyen de plusieurs boulons (non représentés).

Le réservoir 36 d'air comprimé présente une forme sensiblement annulaire, et comprend une enceinte 40 délimitant un volume interne 42 propre à contenir l'air comprimé. Notamment, le volume interne 42 du réservoir 36 est apte à contenir de l'air sous pression élevée, par exemple jusqu'à 6 bar, avantageusement jusqu'à 10 bar, sans perte de pression à l'intérieur du volume interne 42.

L'enceinte 40 présente une section sensiblement en forme de U dans un plan de coupe contenant l'axe central X-X'.

L'enceinte 40 est disposée autour du disque droit 34 circonférentiellement, et notamment fixée par une soudure entre un bord externe du disque droit et une surface externe de l'enceinte 40.

Le réservoir 36 comprend une vanne d'entrée 46 et une vanne de sortie 48, toutes deux disposées à travers l'enceinte 40, du côté extérieur de la roue 14, et débouchant dans le volume interne 42 du réservoir 36.

Avantageusement, le réservoir 36 est sensiblement symétrique par rapport à un plan médian de la roue 14, orthogonal à l'axe central X-X', ce qui améliore l'équilibre de la roue 14 et réduit les risques d'usure.

Avantageusement, le réservoir 36 comprend également une soupape de sécurité, propre à évacuer une partie de l'air comprimé contenu dans le réservoir 36 lorsque la pression dans le volume interne 42 dépasse un seuil prédéterminé, ce qui permet d'éviter les surpressions et donc les risques d'endommagement de l'enceinte 40.

La jante 38 est une tôle présentant une forme annulaire entourant circonférentiellement le réservoir 36. La jante 38 présente une face interne et une face externe portant le pneumatique 24.

La jante 38 est fixée à la paroi 40 du réservoir 36 sur sa face interne par deux soudures, fermant le volume interne 42 du réservoir 36 de façon étanche.

Le pneumatique 24 entoure circonférentiellement la jante 38 et est en appui sur la jante 38 par deux bords latéraux. Le pneumatique 24 définit un volume interne 44, fermé par les bords latéraux et la jante 38, destiné à contenir de l'air sous pression.

Le volume interne 44 du pneumatique 24 est par exemple destiné à contenir de l'air avec une pression interne comprise entre 0,2 et 7 bar, notamment entre 0,5 bar et 2 bar, et avantageusement entre 0,8 bar et 1,8 bar.

La jante 38 comprend une valve 50 de pneumatique, disposée à travers la jante 38 et débouchant dans le volume interne 44 du pneumatique 24 et à l'extérieur de la roue 14.

Le pneumatique 24 présente une surface de roulement s'étendant extérieurement par rapport à l'axe central X-X'. La surface de roulement définit avantageusement des reliefs améliorant l'adhérence du pneumatique 24 au sol 18.

Le système de télégonflage 16 est agencé pour faire varier la pression dans le volume interne 44 d'au moins un des ou de chacun des pneumatiques 24 du véhicule 10, en fonction de conditions de roulement du véhicule 10.

Selon le mode de réalisation représenté sur les figures, le système de télégonflage 16 permet de faire varier la pression interne dans le volume interne des pneumatiques 24 des roues 14 arrière du véhicule 10.

En variante, le système de télégonflage 16 est permet de faire varier la pression dans les pneumatiques 24 de toutes les roues 14 du véhicule 10.

Le système de télégonflage 16 comprend un compresseur 52 d'air, porté par le châssis du véhicule 10, et pour chaque roue 14 dont le système de télégonflage 16 régule la pression, une vanne quatre voies 54 montées la roue 14, un joint tournant 56 monté sur l'essieu 20, et un capteur de pression 58 monté sur la jante 38.

Le système de télégonflage 16 comprend en outre un module de pilotage 60 pneumatique et une pluralité de lignes pneumatiques 62 de contrôle des vannes, ainsi qu'un boitier de contrôle 64 électronique du module de pilotage 60, disposé dans la cabine du véhicule 10.

Le compresseur 52 délivre sur commande un flux d'air comprimé à travers une sortie 66 reliée fluidiquement à chaque joint tournant 56 par des tuyaux 68 respectifs. Le flux d'air comprimé issu du compresseur s'écoule à travers le joint tournant 56 et le conduit central 32, puis à travers un second tuyau 67 et jusqu'à la vanne d'entrée 46 du réservoir 36.

Le joint tournant 56 est monté à l'extrémité intérieure 26 de l'essieu 20, et relie fluidiquement le tuyau 68 avec le conduit central 32 de l'essieu 20 pendant la rotation de l'essieu 20 et de la roue 14.

Avantageusement, le joint tournant 56 est un joint multiple, comme dans l'exemple représenté sur la figure 2, et relie fluidiquement le tuyau 68 avec le conduit central 32 tout en laissant passer au moins une des lignes pneumatiques 62, et, selon un mode de réalisation, deux lignes pneumatique 62 à travers le conduit central 32.

Chaque vanne quatre voies 54 est propre à prendre plusieurs positions, dans lesquelles elle met en contact fluidiquement deux éléments parmi la vanne de sortie 48 du réservoir 36, la valve 50 du pneumatique et l'extérieur.

La vanne quatre voies 54 est pilotée de manière pneumatique, depuis le module de pilotage 60, à travers une des lignes pneumatique 62, afin de sélectionner quels éléments sont reliés fluidiquement. La ligne pneumatique 62 est connectée à un quatrième accès de la vanne quatre voies 54.

En variante, les vannes quatre voies 54 sont pilotées par une liaison électromagnétique sans fil, par exemple depuis le boitier de contrôle 64.

Le capteur de pression 58 est monté sur la jante 38, au niveau de la valve 50 du pneumatique 24, et est adapté pour mesurer la pression dans le volume interne 44 du pneumatique 24.

Le capteur de pression 58 transmet les données de mesure de pression au boitier de contrôle 64, par exemple par une liaison sans fil.

Le boitier de contrôle 64 permet à un opérateur de donner des consignes de changement de la pression dans les pneumatiques 24, en fonction des conditions de roulement. Le boitier de commande 64 est relié au module de pilotage pneumatique 60 par une liaison électrique directe, et aux capteurs de pression 58 par une liaison sans fil par exemple.

Le boitier de contrôle 64 permet ainsi à l'opérateur de changer la pression dans le volume interne 44 du pneumatique 24 depuis une première valeur de pression actuelle vers une seconde valeur de pression désirée. La seconde valeur de pression est par exemple déterminée en fonction des conditions de roulement, notamment de la vitesse de roulement, et/ou de la charge portée par la roue 14, et/ou de l'état du sol.

Le boitier de contrôle 64 est également configuré pour réguler la pression dans le volume interne 42 du réservoir 36 autour d'une valeur de consigne, en commandant l'ouverture de la vanne d'entrée 46 et de la vanne de sortie 48 du réservoir 36 lorsque la pression est respectivement en dessous ou au-dessus de la valeur consigne.

Avantageusement, le système de télégonflage 16 comprend en outre au moins un capteur de charge 70, montés sur au moins un des essieux 20 et relié au boitier de commande 64.

Chaque capteur de charge 70 permet de mesurer une masse portée par la roue 14 et pour transmettre le résultat de la mesure au boitier de commande 64. Le capteur de charge 70 est par exemple un capteur de mesure d'une déformation locale d'une surface externe de l'essieu 20.

Le module de pilotage pneumatique 60 est relié aux vannes quatre voies 54 et aux vannes d'entrée 46 du réservoir 36 par les lignes pneumatiques 62 pour les piloter à distance, en fonction des consignes données sur le boitier de contrôle 64 par l'opérateur.

Le module de pilotage 60 applique notamment une pression de pilotage sur la vanne quatre voies 54, à travers la ligne pneumatique 62 et le joint tournant 56. La vanne quatre voies 54 change alors de configuration en fonction de la pression de pilotage.

Ainsi, le système de télégonflage 16 met en communication sur commande, selon la position de la vanne quatre voies 54, le volume interne 42 du réservoir 36 et le volume interne 44 du pneumatique 24 afin d'augmenter la pression dans le pneumatique 24, le volume interne 44 du pneumatique 24 et l'extérieur afin de réduire la pression dans le pneumatique 24, et le capteur de pression 58 avec le pneumatique 24 ou le réservoir 36 afin de mesurer leurs pressions internes respectives.

Le système de télégonflage 16 permet de plus de réguler la pression dans le réservoir 36 autour d'une valeur de consigne élevée par rapport à la pression de pneumatique, par exemple 6 bar. Ceci permet d'avoir en permanence une source de pression élevée rapidement disponible, et d'accélérer grandement l'étape d'augmentation de la pression interne des pneumatiques.

Un procédé d'ajustement de la pression dans le pneumatique 24 mettant en oeuvre le véhicule décrit ci-dessus va maintenant être décrit.

Le procédé comprend une étape de mesure d'une première valeur de pression dans le volume interne 44 du pneumatique 24 par le capteur de pression 58.

Le procédé comprend ensuite une étape de détermination d'une seconde valeur de pression, différente la première valeur, désirée dans le volume interne 44 du pneumatique 24. La seconde valeur de pression est par exemple déterminée en fonction des conditions de roulement, notamment de la vitesse de roulement, et/ou de la charge portée par la roue 14, et/ou de l'état du sol.

La seconde valeur de pression est par exemple déterminée à partir d'un abaque spécifique des pneumatiques 24, ou bien de manière automatisée.

La seconde valeur de pression est notamment déterminée en fonction d'un poids porté par la roue 14, déterminé au moyen du capteur de charge 70 positionné sur l'essieu 20 de la roue 14, en fonction d'une vitesse de déplacement du véhicule 10, et en fonction du type de sol 18 sur lequel roule le véhicule 10.

Le procédé comprend ensuite une étape de mise en communication du volume interne 44 du pneumatique 24 avec l'un parmi le réservoir 36 et l'extérieur, par le biais de la vanne quatre voies 54, et d'ajustement de la pression interne dans le pneumatique 24.

Par exemple, si la seconde valeur de pression désirée dans le pneumatique 24 est inférieure à la première valeur de pression actuelle, le volume interne 44 du pneumatique 24 est mis en communication avec l'extérieur pour évacuer une partie de la pression interne.

A l'inverse, si la seconde valeur de pression est supérieure à la première valeur, le volume interne 44 du pneumatique 24 est mis en relation avec le réservoir 36 pour faire rentrer de l'air comprimé dans le volume interne du pneumatique 24.

Enfin, le procédé comprend une étape de roulement du véhicule avec la pression ajustée dans le volume interne 44 du pneumatique 24.

Simultanément au roulement du véhicule 10, le réservoir 36 est régulièrement mis en communication avec le capteur de pression 58 par le biais de la vanne quatre voies 54, et la pression dans le volume interne 42 du réservoir 36 est mesurée pour être régulée autour d'une valeur de consigne prédéterminée.

Quand la pression dans le réservoir 36 est plus faible que la valeur de consigne, le réservoir 36 est rempli par le compresseur 52 à travers le joint tournant 56 et la vanne d'entrée 46, jusqu'à la pression de consigne du réservoir 36.

Le maintien du réservoir 36 à une pression de consigne se fait pendant le roulement du véhicule 10, tout comme l'ajustement de la pression dans le pneumatique 24, afin de réduire les temps d'arrêt du véhicule 10 au cours de ces opérations.

De plus, le maintien d'une pression de consigne dans le réservoir 36 permet d'accélérer l'étape d'ajustement de la pression dans le pneumatique 24.

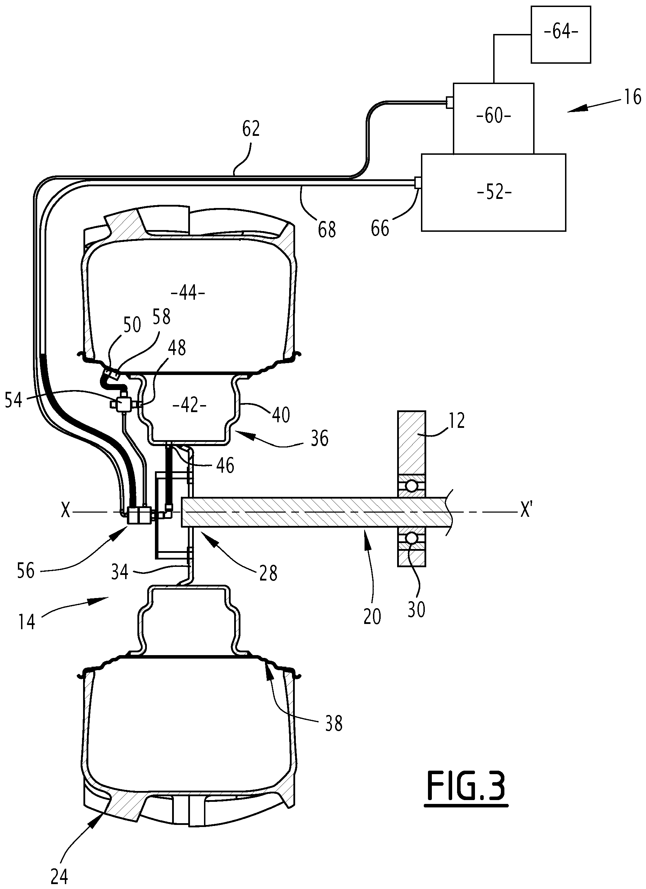

Un deuxième mode de réalisation, représenté sur la figure 3, va maintenant être décrit. Le système de télégonflage équipant le véhicule 10 est similaire au système de télégonflage décrit plus haut, à l'exception des différences décrites ci-après.

Dans ce mode de réalisation, l'air comprimé est acheminé depuis le compresseur 52 jusqu'à chaque roue 14 par un tuyau 68, qui s'étend du côté externe de la roue 14 par rapport au châssis 12 du véhicule 10.

Notamment, le tuyau 68 est rigide, sur une partie ou sur la totalité de sa longueur.

L'essieu 20 est plein et ne définit pas de conduit central 32.

Chaque essieu 20 porte alors notamment deux roues 14 fixées à chacune de ses extrémités 28.

Le joint tournant 56 est fixé au disque droit 34, dans le prolongement de l'axe central X-X' de l'essieu 20, et reçoit l'extrémité libre du tuyau 68 du côté externe, à l'opposé de l'essieu 20.

Les lignes de pression 62 s'étendent le long du tuyau 68 jusqu'au joint tournant 56, puis à travers le joint tournant 56 et jusqu'à la vanne quatre-voies 54.

## Revendications

1. Véhicule (10) automobile comprenant :
- au moins un essieu (20) ;
- au moins une roue (14) comprenant un disque droit (34) fixé à l'essieu (20), une jante (38) et un pneumatique (24) disposé autour de la jante (38),
- un système de télégonflage (16), propre à faire varier une pression interne dans un volume interne (44) du pneumatique (24), en fonction de conditions de roulement du véhicule (10), le système de télégonflage (16) comprenant un compresseur (52) de gaz porté par le véhicule (10),
la roue (14) comprenant un réservoir (36), disposé entre le disque droit (34) et la jante (38), le réservoir (36) contenant un gaz pressurisé et étant fluidiquement connecté au compresseur (52) à travers une vanne d'entrée (46),
le système de télégonflage (16) comprenant en outre un capteur de pression (58) propre à mesurer une pression dans le volume interne (44) du pneumatique (24) et une vanne quatre voies (54) reliant fluidiquement deux éléments parmi :
- le réservoir (36),
- le volume interne (44) du pneumatique (24), et
- l'extérieur du pneumatique (24).

2. Véhicule (10) selon la revendication 1, dans lequel le véhicule (10) est un véhicule agricole.

3. Véhicule (10) selon la revendication 1 ou 2, dans lequel le réservoir (36) présente une forme sensiblement annulaire et sensiblement symétrique par rapport à un plan médian de la roue (14).

4. Véhicule (10) selon l'une quelconque des revendications 1 à 3, dans lequel le système de télégonflage (16) est apte à faire varier la pression interne dans le volume interne (44) du pneumatique (24) pendant le roulement du véhicule (10) ainsi qu'à l'arrêt.

5. Véhicule (10) selon l'une quelconque des revendications 1 à 4, dans lequel la vanne d'entrée (46) du réservoir (36) est reliée au compresseur (52) par l'intermédiaire d'un joint tournant (56) monté sur le moyeu (20) de la roue (14).

6. Véhicule (10) selon la revendication 5, dans lequel le système de télégonflage (16) est apte à réguler une pression de gaz dans le réservoir (36) autour d'une valeur de consigne prédéterminée du véhicule (10) ainsi qu'à l'arrêt.

7. Véhicule (10) selon l'une quelconque des revendications 1 à 6, dans lequel le système de télégonflage (16) comprend un module de pilotage (60) pneumatique, pilotant la vanne quatre voies (54) par une pression de pilotage, le véhicule (10) comprenant en outre un joint tournant (56) disposé dans le moyeu (20) de la roue (14) et transmettant la pression de pilotage du module de gestion (60) à la vanne quatre voies (54).

8. Véhicule (10) selon l'une quelconque des revendications 1 à 7, comprenant au moins un capteur de charge (70) disposé sur le moyeu (20) de la roue (14) du véhicule (10), propre à mesurer une masse portée par la roue (14).

9. Procédé d'ajustement d'une pression dans un pneumatique (24) d'au moins une roue (14) d'un véhicule (10) automobile selon l'une quelconque des revendications 1 à 8, le procédé comprenant les étapes suivantes :
- mesure d'une première valeur de pression dans le pneumatique (24) par le capteur de pression (58) ;
- détermination d'une seconde valeur de pression, différente la première valeur, désirée dans le pneumatique (24), en fonction de conditions de roulement du véhicule (10) ;
- mise en communication du volume interne (44) du pneumatique (24) avec le réservoir (36) ou avec l'extérieur, par le biais de la vanne quatre voies (54), et ajustement de la pression dans le pneumatique (24) ;
- roulement du véhicule (10) avec une pression ajustée dans le pneumatique (24) ; et
- simultanément au roulement du véhicule (10), remplissage du réservoir (36) par le compresseur (52) jusqu'à une pression de consigne du réservoir (36).

10. Procédé selon la revendication 9, dans lequel la seconde valeur de pression est déterminée en fonction d'une masse portée par la roue (14), déterminée au moyen d'un capteur de charge (70) positionné sur le moyeu (20) de la roue (14).

## Patentansprüche

1. Kraftfahrzeug (10) umfassend:
- mindestens eine Achse (20);
- mindestens ein Rad (14), das eine an der Achse (20) befestigte aufrechte Scheibe (34), eine Felge (38) und einen um die Felge (38) herum angeordneten Reifen (24) umfasst,
- ein Reifendruckregelsystem (16), das geeignet ist, einen Innendruck in dem Innenvolumen (44) des Reifens (24) abhängig von den Rollbedingungen des Fahrzeugs (10) zu variieren,
wobei das Rad (14) einen Behälter (36) umfasst, der zwischen der aufrechten Scheibe (34) und der Felge (38) angeordnet ist, wobei der Behälter (36) ein unter Druck stehendes Gas enthält und fluidisch mit dem Kompressor (52) über ein Eingangsventil (46) verbunden ist,
wobei das Reifendruckregelsystem (16) außerdem einen Drucksensor (58), der geeignet ist, einen Druck in dem Innenvolumen (44) des Reifens (24) zu messen, und ein 4-Wege-Ventil (54) umfasst, das fluidisch zwei Elemente verbindet von:
- dem Behälter (36),
- dem Innenvolumen (44) des Reifens (24) und
- dem Außenraum des Reifens (24).

2. Fahrzeug (10) nach Anspruch 1, bei dem das Fahrzeug (10) ein landwirtschaftliches Fahrzeug ist.

3. Fahrzeug (10) nach Anspruch 1 oder 2, bei dem der Behälter (36) eine im Wesentlichen ringförmige und im Wesentlichen symmetrische Form in Bezug auf eine Mittelebene des Rades (14) aufweist.

4. Fahrzeug (10) nach einem beliebigen der Ansprüche 1 bis 3, bei dem das Reifendruckregelsystem (16) geeignet ist, den Innendruck in dem Innenvolumen (44) des Reifens (24) während des Fahrens des Fahrzeugs (10) sowie beim Halten zu variieren.

5. Fahrzeug (10) nach einem beliebigen der Ansprüche 1 bis 4, bei dem das Eingangsventil (46) des Behälters (36) mit dem Kompressor (52) über eine Drehdurchführung (56), die auf der Nabe (20) des Rades (14) montiert ist, verbunden ist.

6. Fahrzeug (10) nach Anspruch 5, bei dem das Reifendruckregelsystem (16) geeignet ist, einen Gasdruck in dem Behälter (36) um einen vorbestimmten Sollwert des Fahrzeugs (10) herum sowie beim Halten einzustellen.

7. Fahrzeug (10) nach einem beliebigen der Ansprüche 1 bis 6, bei dem das Reifendruckregelsystem (16) ein pneumatisches Steuermodul (60) umfasst, das das 4-Wege-Ventil (54) durch einen Steuerdruck steuert, wobei das Fahrzeug (10) außerdem eine in der Nabe (20) des Rades (14) angeordnete Drehdurchführung (56) umfasst, die den Steuerdruck des Steuermoduls (60) an das 4-Wege-Ventil (54) überträgt.

8. Fahrzeug (10) nach einem beliebigen der Ansprüche 1 bis 7, mindestens einen Lastsensor (70) umfassend, der auf der Nabe (20) des Rades (14) des Fahrzeugs (10) angeordnet ist und geeignet ist, eine von dem Rad (14) getragene Masse zu messen.

9. Verfahren zum Einstellen eines Drucks in einem Reifen (24) mindestens eines Rades (14) eines Kraftfahrzeuges (10) nach einem beliebigen der Ansprüche 1 bis 8, wobei das Verfahren folgende Schritte umfasst:
-- Messen eines ersten Druckwertes in dem Reifen (24) durch den Drucksensor (58);
- Bestimmen eines zweiten Druckwertes, unterschiedlich zum ersten Wert, der in dem Reifen (24) gewünscht ist, abhängig von den Rollbedingungen des Fahrzeugs (10);
- in Verbindung Bringen des Innenvolumens (44) des Reifens (24) mit dem Behälter (36) oder dem Außenraum über das 4-Wege Ventil (54) und Einstellen des Drucks in dem Reifen (24);
- Fahren des Fahrzeugs (10) mit dem im Reifen (24) eingestellten Druck;
- gleichzeitig mit dem Fahren des Fahrzeugs (10) Füllen des Behälters (36) durch den Kompressor (52) bis ein Solldruck des Behälters (36) erreicht ist.

10. Verfahren nach Anspruch 9, bei dem der zweite Druckwert abhängig von einer von dem Rad (14) getragenen Masse, die mittels eines Lastsensors (70) ermittelt wird, der an der Nabe (20) des Rades (14) positioniert ist, bestimmt wird.

## Claims

1. Motor vehicle (10), comprising:
- at least one axle (20);
- at least one wheel (14) comprising a straight disc (34) fixed to the axle (20), a rim (38) and a tyre (24) arranged around the rim (38),
- a remote inflation system (16) capable of varying an internal pressure in an internal volume (44) of the tyre (24) in dependence on driving conditions of the vehicle (10), the remote inflation system (16) comprising a gas compressor (52) carried by the vehicle (10),
the wheel (14) comprising a reservoir (36) arranged between the straight disc (34) and the rim (38), the reservoir (36) containing a pressurised gas and being fluidically connected to the compressor (52) through an inlet valve (46),
the remote inflation system (16) further comprising a pressure sensor (58) capable of measuring a pressure in the internal volume (44) of the tyre (24), and a four-way valve (54) which fluidically connects two elements from among:
- the reservoir (36),
- the internal volume (44) of the tyre (24), and
- the exterior of the tyre (24).

2. Vehicle (10) according to claim 1, wherein the vehicle (10) is an agricultural vehicle.

3. Vehicle (10) according to claim 1 or 2, wherein the reservoir (36) has a shape which is substantially annular and substantially symmetrical with respect to a midplane of the wheel (14).

4. Vehicle (10) according to any one of claims 1 to 3, wherein the remote inflation system (16) is capable of varying the internal pressure in the internal volume (44) of the tyre (24) while the vehicle (10) is moving and also when it is stopped.

5. Vehicle (10) according to any one of claims 1 to 4, wherein the inlet valve (46) of the reservoir (36) is connected to the compressor (52) by way of a rotating joint (56) mounted on the hub (20) of the wheel (14).

6. Vehicle (10) according to claim 5, wherein the remote inflation system (16) is capable of regulating a gas pressure in the reservoir (36) about a predetermined set point of the vehicle (10) and also when it is stopped.

7. Vehicle (10) according to any one of claims 1 to 6, wherein the remote inflation system (16) comprises a pneumatic control module (60) which controls the four-way valve (54) by means of a control pressure, the vehicle (10) further comprising a rotating joint (56) which is arranged in the hub (20) of the wheel (14) and transmits the control pressure of the management module (60) to the four-way valve (54).

8. Vehicle (10) according to any one of claims 1 to 7, comprising at least one load sensor (70) arranged on the hub (20) of the wheel (14) of the vehicle (10), capable of measuring a mass carried by the wheel (14).

9. Method for adjusting a pressure in a tyre (24) of at least one wheel (14) of a motor vehicle (10) according to any one of claims 1 to 8, the method comprising the following steps:
- measuring a first pressure value in the tyre (24) by means of the pressure sensor (58);
- determining a desired second pressure value, which is different from the first value, in the tyre (24) in dependence on driving conditions of the vehicle (10);
- placing the internal volume (44) of the tyre (24) in communication with the reservoir (36) or with the exterior by way of the four-way valve (54), and adjusting the pressure in the tyre (24);
- driving the vehicle (10) with an adjusted pressure in the tyre (24); and
- at the same time as the vehicle (10) is being driven, filling the reservoir (36) by means of the compressor (52) to a set-point pressure of the reservoir (36).

10. Method according to claim 9, wherein the second pressure value is determined in dependence on a mass carried by the wheel (14), which is determined by means of a load sensor (70) positioned on the hub (20) of the wheel (14).
